# EUROPÄISCHE PATENTANMELDUNG

(11) **EP 1 890 208 A1**
(43) Veröffentlichungstag der Anmeldung: **20.02.2008**
(21) Anmeldenummer: 06017040.4
(22) Anmeldetag: 16.08.2006
(51) Int. Cl.: G05B 19/05, G06F 9/44

(54) **System und Verfahren zum Anordnen von Schrittkettenzweigen**

(71) Anmelder: SIEMENS AKTIENGESELLSCHAFT, 80333 München (DE)
(72) Erfinder: Pfahlmann, Lothar, 91083 Baiersdorf (DE); Rachinger, Bernd, 91575 Windsbach (DE); Schaer, Stephan, 90453 Nürnberg (DE)

(57) **Zusammenfassung**

System (11) zur adaptierbaren grafischen Darstellung von Schrittketten, wobei die Schrittketten insbesondere Bearbeitungsschritte einer Speicherprogrammierbaren Steuerung eines Automatisierungssystems beschreiben, aufweisend: einen Editor (1) zur Visualisierung von die Schrittketten (2) bildenden Grafikelementen (3) und zur Bearbeitung der Schrittketten (2) durch einen Benutzer des Systems, vorgebbare Anordnungsschemata (4) für die Grafikelemente (3) und Adaptionsmittel zur Anpassung der grafischen Darstellung der Schrittketten (2) auf Basis der Anordnungsschemata (4), wobei die Anpassung der grafischen Darstellung der Schrittketten durch Verschiebung der Positionen der Grafikelemente (3) in dem Editor (1) anhand von in den Anordnungsschemata hinterlegten Regeln erfolgt.

## Beschreibung

Die Erfindung betrifft ein System und ein Verfahren zur adaptierbaren grafischen Darstellung von Schrittketten, insbesondere Schrittketten, die Bearbeitungsschritte einer speicherprogrammierbaren Steuerung eines Automatisierungssystems beschreiben.

Die einzelnen Arbeitsschritte einer speicherprogrammierbaren Steuerung innerhalb eine Automatisierungssystems werden heutzutage in der Regel mit Hilfe von grafischen Editoren beschrieben bzw. projektiert. Hierbei werden die einzelnen Arbeitsschritte in der Regel durch Grafikelemente innerhalb des Editors repräsentiert. Mehrere Grafikelemente werden dann zu einer Schrittkette, die die Arbeitsschritte der speicherprogrammierbaren Steuerung beschreibt, zusammengefügt. Eine Schrittkette kann hierbei Verzweigungen aufweisen bzw. simultan oder alternativ abzuarbeitende Teil-Schrittketten, welche dann entsprechend der Beschreibung bzw. Projektierung von der speicherprogrammierbaren Steuerung ausgeführt werden. Die Schrittketten werden somit in dem grafischen Editor mitsamt den Verzweigungen, die zwischen den einzelnen Schritten erfolgen und somit zwischen den einzelnen Grafikelementen liegen, dargestellt.

Hierbei erfolgt die Darstellung der Grafikelemente der Schrittketten in der Regel nach einem festen Schema. Die Grafikelemente sind nach diesem Schema angeordnet. Dieses Anordnungs-Schema ist jedoch nicht für alle Anwendungsfälle des Benutzers beim Editieren bzw. Projektieren optimal.

Die Aufgabe der vorliegenden Erfindung besteht daher darin, eine adaptierbare Darstellungsmöglichkeit für Schrittketten anzugeben, welche eine optimale Ausnutzung des für die Darstellung zur Verfügung stehenden Platzes ermöglicht.

Die Aufgabe wird erfindungsgemäß gelöst durch ein System zur adaptierbaren grafischen Darstellung von Schrittketten, wobei die Schrittketten insbesondere Bearbeitungsschritte einer speicherprogrammierbaren Steuerung eines Automatisierungssystems beschreiben, aufweisend: einen Editor zur Visualisierung von die Schrittketten bildenden Grafikelementen und zur Bearbeitung der Schrittketten durch einen Benutzer des Systems, vorgebbare Anordnungsschemata für die Grafikelemente und Adaptionsmittel zur Anpassung der grafischen Darstellung der Schrittketten auf Basis der Anordnungsschemata, wobei die Anpassung der grafischen Darstellung der Schrittketten durch Verschiebung der Position der Grafikelemente in dem Editor anhand von in den Anordnungsschemata hinterlegten Regeln erfolgt.

Die Aufgabe wird weiterhin gelöst durch ein Verfahren zur adaptierbaren grafischen Darstellung von Schrittketten, wobei die Schrittketten insbesondere Bearbeitungsschritte einer speicherprogrammierbaren Steuerung eines Automatisierungssystem beschreiben, bei dem die die Schrittketten bildenden Grafikelemente in einem Editor visualisiert werden und durch einen Benutzer des Systems bearbeitet werden, die Anordnung der Grafikelemente durch Anordnungsschemata vorgegeben wird und die graphische Darstellung der Schrittketten auf Basis der Anordnungsschemata angepasst wird, wobei die Anpassung der grafischen Darstellung der Schrittketten durch Verschiebung der Positionen der Grafikelemente in dem Editor anhand von in den Anordnungsschemata hinterlegten Regeln erfolgt.

Der Erfindung liegt die Erkenntnis zugrunde, dass die Darstellung von Schrittketten in einem Editor für den Benutzer des Editors bzw. des Systems nicht immer optimal ist, so dass der für die Darstellung zur Verfügung stehende Platz in der Regel suboptimal genutzt werden kann. Bei einer starren, einem definierten Schema folgenden Darstellung einzelner Schrittketten und den dazugehörigen Grafikelementen kann die die Bearbeitungsschritte einer Steuerung visualisierende Schrittkette in der Regel nicht Platz sparend und optimal dargestellt werden. Der Benutzer ist beim Editieren bzw. Projektieren mit Hilfe des Editors auf das fest vorgegebene Anordnungsschema der Schrittketten angewiesen. Eine Einflussnahme und damit einer bestimmten Situation angepasste Darstellungsmöglichkeit der Schrittketten ist nicht gegeben. Somit kommt es bei der Darstellung zur Verschwendung von dem für die Darstellung zur Verfügung stehenden Raum.

Mit Hilfe der vorliegenden Erfindung kann die grafische Darstellung der Schrittketten daher adaptiert werden. Hierfür stehen im System vorgebbare Anwendungsschemata für die Grafikelemente der Schrittketten zur Verfügung. Die Einzelnen Grafikelemente der Schrittketten werden dann anhand der vorgebbaren Anordnungsschemata angeordnet. Hierbei werden die Grafikelemente in ihrer Position mit Hilfe der Adaptionsmittel derart verschoben, dass sie den in den Anordnungsschemata hinterlegten Regeln folgen. Es gibt somit für die Anordnung der Grafikelemente nicht eine durch den Benutzer völlig frei wählbare Positionierungsmöglichkeit. Die Positionen sind vielmehr derart vorgegeben, dass ein Umordnen der Grafikelemente nach festen Regeln erfolgt. Somit sind mehrere Darstellungsmöglichkeiten der Schrittketten, die zu einer besseren Ausnutzung des für die Darstellung zur Verfügung stehenden Raumes führen, mit Hilfe der Erfindung möglich. Die Anordnung der Grafikelemente erfolgt hierbei jedoch immer nach den Vorgebbaren Anordnungsschemata, welche die für die Anordnung relevanten Regeln beinhalten.

Eine weitere Vorteilhafte Ausbildung der Erfindung ist dadurch gekennzeichnet, dass die Verschiebung der Positionen der Grafikelemente in dem Editor unter Beibehaltung ihrer Verknüpfung mit weiteren Grafikelementen der Schrittketten erfolgt. Hierdurch wird sichergestellt, dass die Struktur der Schrittkette inklusive der ihr innewohnenden Verzweigungen bei Verschiebung der einzelnen Grafikelemente erhalten bleibt. Dadurch wird gewährleistet, dass die einzelnen projektierten bzw. dargestellten Bearbeitungsschritte der speicherprogrammierbaren Steuerung in ihrem jeweiligen Verhältnis zueinander stabil bleiben.

Eine weitere vorteilhafte Ausbildung der Erfindung ist dadurch gekennzeichnet, dass die Anordnungsschemata bestimmten Anwendungsfällen und/oder Bearbeitungssituationen des Benutzers zuweisbar sind. Beispielsweise kann innerhalb einer Arbeitssituation oder einem Anwendungsfall der Bedarf entstehen, eine breitere Darstellungsform als bisher zu ermöglichen. Dies ist für den Benutzter insbesondere zur Ausnutzung eines horizontalen Bildschirminhalts von Vorteil. Eine andere Arbeitssituation mag beispielsweise eine schmalere Darstellung der einzelnen Grafikelemente der verschiedenen Teil-Schrittketten innerhalb der darzustellenden Schrittkette benötigen. Beispielsweise bei der Darstellung für einen Ausdruck ist eine schmalere Darstellung notwendig als jene, welche die gesamte Bildschirmbreite eines Standardmonitors ausnutzt. In diesem Fall kann je nach Arbeitssituation eine schmalere oder breitere Darstellungsform gewählt werden.

Eine schmale Darstellungsform ist beispielsweise auch von Vorteil, wenn der Benutzer des Systems mehrere Fenster auf seinem Bildschirm offen hat, und der Editor für die Darstellung der Bearbeitungsschritte der speicherprogrammierbaren Steuerung lediglich einen Teil des Monitors zur Verfügung hat. Hierbei kann eine vertikale Darstellung bzw. eine schmale Darstellung der projektierten Grafikelemente bei vertikaler Bildschirmunterteilung gewählt werden bzw. eine verbreiterte oder horizontal ausgedehnte Darstellungsform kann bei der horizontalen Bildschirmunterteilung gewählt werden.

Eine weitere vorteilhafte Ausbildung der Erfindung ist dadurch gekennzeichnet, dass Eingabemittel zur Eingabe der Bearbeitungssituation und/oder des Anwendungsfalls durch den Benutzer des Systems vorgesehen sind. Hierbei kann der Benutzter über eine definierte Eingabemaske selber angeben, welcher Anwendungsfall derzeit vorliegt. Der Benutzer kann somit über die Angabe des Anwendungsfalls bestimmte Anordnungsschemata für die Darstellung der Grafikelemente selbst in das System eingeben.

Eine weitere vorteilhafte Ausbildung der Erfindung ist dadurch gekennzeichnet, das Analysemittel zur automatischen Analyse der Bearbeitungssituation und/oder des Anwendungsfalls durch das System vorgesehen sind. Hierbei braucht der Benutzer nicht über eine Eingabemaske anzugeben, um welchen Anwendungsfall es sich handelt bzw. welche Arbeitssituation vorliegt. Vielmehr erkennt das System selbst anhand von Standardbefehlen, wie beispielsweise Drucken oder horizontale Bildschirmunterteilung oder vertikale Bildschirmunterteilung, welche Darstellung, beispielsweise eine eher in die Länge gezogene oder eine eher in die Breite gezogene Darstellung der Grafikelemente für den Benutzer in dieser Arbeitssituation jetzt vorteilhaft ist.

Eine weitere vorteilhafte Ausbildung der Erfindung ist dadurch gekennzeichnet, dass das System die Anpassung der grafischen Darstellung der Schrittketten durch Verschiebung der Positionen der Grafikelemente in dem Editor anhand der in den Anordnungsschemata hinterlegten Regeln bei Änderung der Bearbeitungssituation und/oder des Anwendungsfalls automatisch durchführt. Wird also vom System entweder durch die Eingabe des Benutzers mit Hilfe einer Eingabemaske oder durch die automatische Analyse der Bearbeitungssituation bzw. des Anwendungsfalls erkannt, dass die Arbeitssituation bzw. der Anwendungsfall sich für den Benutzer geändert hat, so wird automatisch anhand der Anwendungsschemata mit den in ihnen hinterlegten Regeln die grafische Darstellung der Grafikelemente, welche die Schrittketten und die Teil-Schrittkette repräsentieren, angepasst. Eine weitere Eingabe durch den Benutzer ist nicht erforderlich. Den Bearbeitungssituationen bzw. den Anwendungsfällen sind hierbei über die Anordnungsschemata eben bestimmte Regeln für die grafische Darstellung statisch zugewiesen, so dass lediglich bestimmte Darstellungsmöglichkeiten gewählt werden können. Diese Darstellungsmöglichkeiten können vom System dann automatisch nach Erkennen der Bearbeitungssituation ausgeführt werden.

Eine weitere vorteilhafte Ausbildung der Erfindung ist dadurch gekennzeichnet, dass das System mindestens ein Bedienelement zur händischen Verschiebung der Grafikelemente in dem Editor durch den Benutzer des Systems aufweist. Hierbei kann mit Hilfe des Bedienelements die Position der Grafikelemente innerhalb des Editors durch den Benutzer selbst verändert werden. Das System verschiebt somit die einzelnen Grafikelemente innerhalb der Schrittketten nicht automatisch, sondern der Benutzer kann selbst bestimmen, ob bestimmte Teil-Schrittkette innerhalb des Editors anders dargestellt werden sollen. Hierbei wird dem Benutzer somit mehr Eigenverantwortlichkeit und mehr Manipulationsmöglichkeit bzw. Adaptionsmöglichkeit der grafischen Darstellung gegeben.

Eine weitere vorteilhafte Ausbildung der Erfindung ist dadurch gekennzeichnet, dass das mindestens eine Bedienelement als Control-Funktion einer Tastatur ausgebildet ist. Hierdurch wird dem Benutzer durch einfache Bedienung der Tastatur die Möglichkeit gegeben, die Grafikelemente auf dem Editor zu verschieben. Es ist vorstellbar, dass der Benutzer selber eine Tastenbelegung auf der Tastatur wählt bzw. über das Gesamtsystem definiert, so dass genau diese Tastenbelegung dann zu einer Verschiebung der Grafikelemente führt. Beispielsweise kann eine bestimmte Taste oder auch eine Tastenkombination als Auslöser für eine Verbreiterung der grafischen Darstellung definiert sein bzw. gewählt werden. Anders kann eine andere Taste oder eine andere Tastenkombination für die vertikale Ausdehnung der jeweiligen Darstellung der Schrittketten gewählt werden bzw. vom System bereitgestellt werden.

Eine weitere vorteilhafte Ausbildung der Erfindung ist dadurch gekennzeichnet, dass das mindestens eine Bedienelement als Selektions-Funktion einer Maus ausgebildet ist, wobei die Selektion über Mehrfachselektion einzelner Grafikelemente vorgesehen ist und/oder wobei die Selektion durch eine Lassofunktion der Maus vorgesehen ist. Hierbei wird dem Benutzer auf vorteilhafte Weise ermöglicht, mit der grafischen Darstellung auf dem Editor über eine Standard-Maus zu interagieren. Beispielsweise kann durch einfachen Mausklick eine Selektion einzelner Grafikelemente oder Teil-Schrittketten erfolgen, welche nach Selektion dann in einem andern Modus dargestellt werden. Ebenso kann es dem Benutzer beispielsweise ermöglicht werden, durch das Einfangen mehrerer Grafikelemente, welche eine ganze Teilschrittkette repräsentieren, diese Teilschrittkette zu markieren und dann durch Ziehen der Maus in eine Richtung, beispielsweise an den rechten Bildschirmrand eine verbreiterte Darstellung der jeweiligen Grafikelemente der Schrittkette zu erzielen.

Eine weitere vorteilhafte Ausbildung der Erfindung ist dadurch gekennzeichnet, dass eine Verbreiterung der grafischen Darstellung der Schrittketten durch Horizontalverschiebung der Grafikelemente anhand der in den Anordnungsschemata hinterlegten Regeln vorgesehen ist, wobei die Grafikelemente einer Verzweigung und/oder eines Alternativzweiges der Schrittkette zur Horizontalverschiebung vorgesehen sind. Vorteilhaft ist hierbei, dass eine Verbreiterung der gesamten grafischen Darstellung der Schrittkette dadurch erzielt wird, dass einzelne Verzweigungen oder Alternativzweige der jeweiligen Schrittkette derart aus der eigentlichen Schrittkette ausgelagert werden, dass sie beispielsweise als mit der Schrittkette zusammenhängende Verzweigungen rechts oder links neben der eigentlichen Schrittkette dargestellt werden. Hierbei folgt die Darstellung der Grafikelemente jeweils der in den Anordnungsschemata hinterlegten Regeln. Es ist somit nicht möglich die Grafikelemente frei auf der Oberfläche des Bildschirms bzw. Monitors zu positionieren. Vielmehr ist eine geregelte Darstellung der Grafikelemente welche zur Übersichtlichkeit der Darstellung der jeweiligen Schrittketten beiträgt, durch das System gewährleistet.

Eine weitere vorteilhafte Ausbildung der Erfindung ist dadurch gekennzeichnet, dass die Darstellung der einzelnen horizontal verschobenen Verzweigungen und/oder Alternativzweige der Schrittkette jeweils als Teil-Schrittkette mit vertikal angeordneten Grafikelementen vorgesehen ist, wobei die innerhalb der Schrittkette jeweils später abzweigenden Teil-Schrittketten über eine geringere Strecke gegenüber der Schrittkette horizontal verschiebbar sind als die jeweils früher abzweigenden Teil-Schrittkette, wodurch die vertikalen Teil-Schrittketten nebeneinander angeordnet darstellbar sind. Vorteilhaft ist hierbei, dass in dem Fall, dass mehrere Abzweigungen innerhalb der Schrittkette vorkommen, die räumliche Anordnung der Abzweigungen zueinander durch das System mit den in den Anordnungsschemata hinterlegten Regeln vorgegeben ist. So wird beispielsweise die erste Abzweigung, welche eine Teilschrittkette repräsentiert, am weitesten horizontal herausgezogen und dann wieder als eigene vertikale Schrittkette dargestellt, welche mit der Ursprungs-Schrittkette zusammenhängt. Jede weitere im Verlauf der Ursprungs-Schrittkette folgende Teil-Schrittkette wird dann jeweils um eine geringere Länge horizontal herausgezogen und selber wieder vertikal dargestellt, als die vorhergehende Teil-Schrittkette. Somit wird eine ineinander geschachtelte Darstellung der jeweiligen Verzweigungen bzw. Teil-Schrittkette mit ihren dazugehörigen Grafikelementen ermöglicht. Auf diese Weise ist eine sehr vorteilhafte übersichtliche Darstellung der Schrittketten innerhalb des Systems möglich.

Eine weitere vorteilhafte Ausbildung der Erfindung ist dadurch gekennzeichnet, dass eine Verkleinerung der Breite der grafischen Darstellung der Schrittketten durch Vertikalverschiebung der Grafikelemente anhand der in den Anordnungsschemata hinterlegten Regeln vorgesehen ist. Werden hierbei beispielsweise durch den Benutzer oder das System selbst die einzelnen Grafikelemente einer Schrittkette vertikal auseinander gezogen, so können die abzweigenden Teil-Schrittketten näher an die Ursprungs-Schrittkette heranrücken. Hierbei erfolgt das Verschieben der Grafikelemente der Ursprungs-Schrittkette sowie das Heranrücken der Teil-Schrittketten jeweils wieder auf Basis der in den Anordnungsschemata hinterlegten Regeln, so dass eine freie Positionierung bzw. eine unübersichtliche Darstellung, bei der es beispielsweise auch zu Knicks und Winkeln innerhalb einzelner Schrittketten bzw. Teil-Schrittketten kommen könnte, durch das System automatisch verhindert wird.

Eine weitere vorteilhafte Ausbildung der Erfindung ist dadurch gekennzeichnet, dass die Darstellung der einzelnen vertikal verschobenen Verzweigungen und/oder Alternativzweige der Schrittkette jeweils als Teil-Schrittkette mit vertikal angeordneten Grafikelementen vorgesehen ist, wobei die aus der Schrittkette abzweigenden Teil-Schrittketten jeweils über die gleiche Strecke gegenüber der Schrittkette horizontal verschiebbar sind, wodurch die vertikalen Teil-Schrittketten untereinander angeordnet darstellbar sind. Hierdurch wird auf vorteilhafte Weise erreicht, dass eine sehr schmale Darstellung der Ursprungs-Schrittkette und ihrer zugehörigen Teil-Schrittketten möglich ist. Werden die Grafikelemente der Ursprungs-Schrittkette auseinander gezogen und verlängern sich die Verbindungsstriche zwischen diesen Grafikelementen, so können rechts oder links neben der Ursprungs-Schrittkette die einzelnen Teil-Schrittketten untereinander angeordnet werden, so dass eine geringe Breite in der Darstellung ermöglicht wird. Gleichzeitig wird es für den Betrachter der dargestellten Schrittkette unmittelbar deutlich, welche Teil-Schrittketten auf welche Grafikelemente, die bestimmte Bearbeitungsschritte auf der speicherprogrammierbaren Steuerung repräsentieren, hin folgen. D.h. die sequenzielle Darstellung der Teil-Schrittketten repräsentiert eine übersichtliche Darstellung der einzelnen Abzweigungen, die bei der Bearbeitung auf der speicherprogrammierbaren Steuerung ebenfalls erfolgen.

Im Folgenden wird die Erfindung anhand der in den Figuren dargestellten Ausführungsbeispiele näher beschrieben und erläutert.

Es zeigen:
- FIG 1: eine Übersicht über das System zur adaptierbaren Darstellung von Schrittketten,
- FIG 2: ein Beispiel für eine horizontal ausgerichtete Darstellung,
- FIG 3: ein Beispiel für eine vertikal ausgerichtete Darstellung.

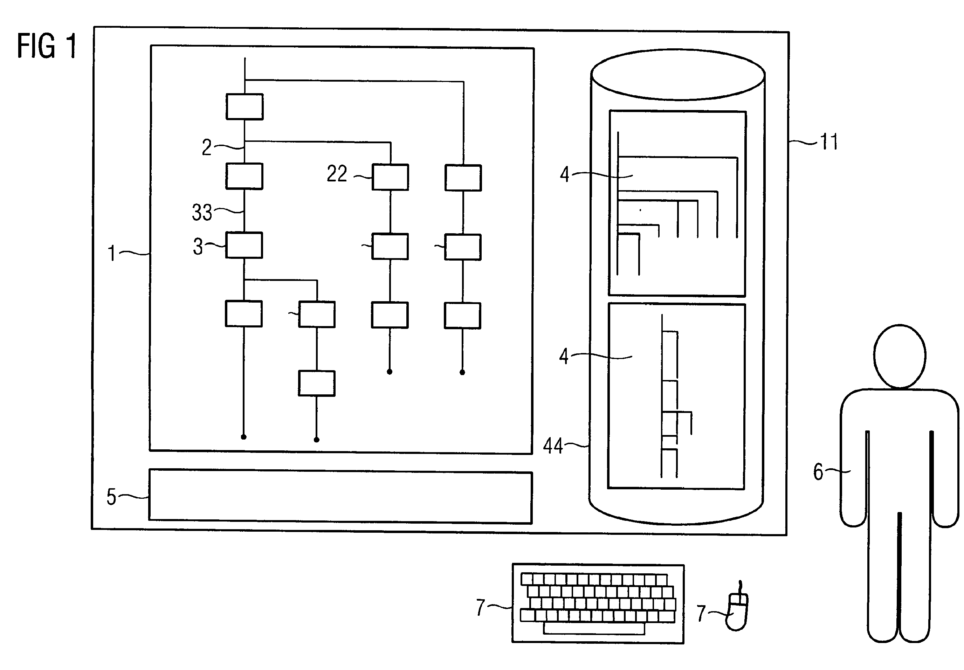

FIG 1 zeigt eine schematische Darstellung des Systems 11 zur adaptierbaren grafischen Darstellung von Schrittketten 2. Hierbei werden die Schrittketten innerhalb des Systems durch einen Editor 1 dargestellt. In dem Editor sind eine Schrittkette 2 und eine Teil-Schrittkette 22 abgebildet. Die Schrittkette 2 mit ihrer dazugehörigen Teil-Schrittkette 22 besteht aus Grafikelementen 3. Die Grafikelemente sind durch Verbindungen 33 miteinander verbunden. Hierbei stellen die einzelnen Grafikelemente Bearbeitungsschritte einer speicherprogrammierbaren Steuerung innerhalb eines Automatisierungssystems dar. Das System 1 verfügt weiter über so genannte Anordnungsschemata 4, welche die Anordnung der Schrittkette mit ihren Teil-Schrittketten und den Grafikelementen mit Hilfe von Regeln vorgeben. Hierbei können für verschiedene Anwendungsfälle mehrere Anordnungsschemata 4 hinterlegt sein. Die Anordnungsschemata sind beispielsweise in einem Speicher 44 des Systems hinterlegt. Die Anordnungsschemata 4 sind hierbei beispielsweise bestimmten Arbeitssituationen oder Anwendungsfällen eines Benutzers 6 zugeordnet. Das System kann weiterhin über Eingabemittel 5 verfügen, über die der Benutzer 6 einen Anwendungsfall in das System eingeben kann und somit eine bestimmte Situation definieren kann, welche dann zum Aufruf des dazugehörigen Anordnungsschemas führt und somit zu einer den Regeln des Anordnungsschemas entsprechenden Visualisierung bzw. Darstellung der einzelnen Grafikelemente 3 auf dem zur Verfügung stehenden Editor 1. Des Weiteren verfügt das System 11 über ein Bedienelement 7. Das Bedienelement 7 kann beispielsweise als Tastatur, über die der Benutzer Befehle an das System geben kann ausgebildet sein oder das Bedienelement 7 kann auch als Maus, über die der Benutzer Eingabebefehle geben kann, ausgebildet sein.

In Abhängigkeit von der Arbeitssituation bzw. dem Anwendungsfall, also beispielsweise in Abhängigkeit davon, ob der Benutzer 6 die Darstellung der Schrittketten 2 mit den Teil-schrittketten 22 über die volle Bildschirmbreite eines Monitors benötigt, oder ob eine eher schmale Darstellung der Schrittkette 2 mit ihren Teil-Schrittkette 22, beispielsweise für einen Ausdruck auf DIN A4 notwendig ist, kann nun die Schrittkette entsprechend dargestellt werden. Dies erfolgt gemäß den in den Anordnungsschemata 4 hinterlegten Regeln für die Darstellung der einzelnen Grafikelemente 3.

Die Schrittkette mit ihren Teil-Schrittketten kann somit auf Basis der in den Anordnungsschemata 4 hinterlegten Regeln eher breit dargestellt werden oder in die Länge gezogen werden. Dieses Umordnen der Grafikelemente 3 erfolgt durch die in den Anordnungsschemata hinterlegten festen Regeln. Hierbei wird sichergestellt, dass ein systematischer Aufbau der Schrittkette beibehalten wird.

Beispielsweise kann der Anwender ein Verschieben in die Breite und eine Verkürzung der Kette erreichen, in dem er die Verzweigungselemente (Simultan/Alternativzweige) horizontal verschiebt. Dies kann Beispielsweise durch die Verwendung einer Tastatur oder einer Maus erfolgen. Hierbei kann der Benutzer 6 des Systems 11 beispielsweise einzelne Schrittketten bzw. Teil-Schrittketten markieren und nach rechts hinausziehen. Ein Verschieben der ganzen Darstellung nach links und Beibehalten der Ursprungsschrittkette am rechten Rand der Darstellung ist ebenfalls möglich. Eine Verkleinerung der Breite der Darstellung kann der Benutzer 6 erreichen, indem er die Grafikelemente 3, die beispielsweise Schritte, Transitionen, Abzweigungen repräsentieren, vertikal verschiebt. Hierdurch wird die Gesamte Schrittkette 2 mit ihren Teil-Schrittketten 22 in die Länge gezogen. Das Einfügen von Knicken und ein freies Verschieben sind dem Benutzer 6 des Systems hierbei nicht erlaubt. Die Darstellungsmöglichkeiten basieren in dem erfindungsgemäßen System 11 vielmehr auf den in den Anordnungsschemata 4 hinterlegten Regeln. Lediglich bestimmte Darstellungen, die vom System vorgegeben sind, sind möglich.

Die Selektion der einzelnen Grafikelemente 3 bzw. der Teil-Schrittketten 22, welche verschoben werden sollen und dadurch die Umordnung der gesamten grafischen Darstellung der Schrittkette 2 zur Folge haben, kann beispielsweise mit Hilfe der Tastatur 7 oder einer Maus 7 erfolgen. Hierbei ist neben einer Mehrfachselektion einzelner Grafikelemente 3 oder Teil-Schrittketten 22 auch eine Direktauswahl beispielsweise durch die Maus mit Hilfe einer Lassofunktion, bei der mehrere Grafikelemente 3 bzw. Teil-Schrittketten 22 eingefangen werden, möglich. Bei der Verschiebung gibt es prinzipiell keine Verschiebe-Grenzen. Wird der Bildbereich des Editors 1 verlassen, so wird in dem erfindungsgemäßen System automatisch weiter gescrollt. Ein Wandern nach rechts oder links außen bzw. nach oben oder unten ist somit möglich.

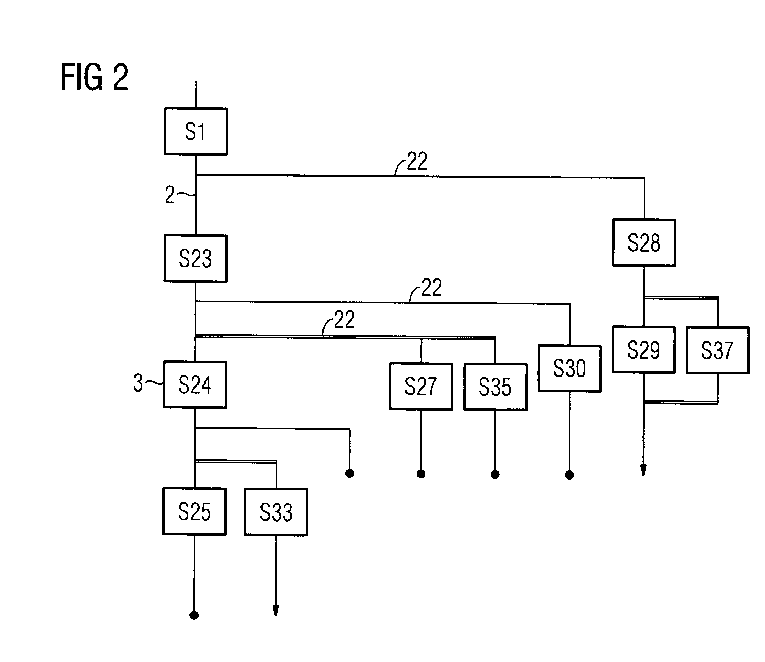

FIG 2 zeigt eine Detaildarstellung einer Schrittkette 2 mit ihr zugehörigen Teil-Schrittketten 22. Die Schrittkette 2 wird durch die einzelnen Grafikelemente 3 repräsentiert. FIG 2 zeigt hierbei eine Optimierung für eine horizontale Darstellung, beispielsweise um einen ganzen Bildschirm auszunutzen oder auch bei horizontaler Bildschirmteilung. Hierbei werden die einzelnen Schrittketten 22 horizontal gegenüber der Ursprungsschrittkette 2 verschoben. Die Verschiebung erfolgt gemäß den in dem Anordnungsschema hinterlegten Regeln derart, dass die erste abzweigende Schrittkette am weitesten horizontal verschoben wird. Die weiteren folgenden abzweigenden Teil-Schrittketten werden jeweils um einen geringeren Betrag horizontal verschoben. Dies führt zu einer ineinander geschachtelten Darstellung der einzelnen Schrittketten in Abhängigkeit von dem Zeitpunkt ihrer Verzweigung aus der Ursprungs-Schrittkette. Eine übersichtliche Darstellung der Schrittkette mit ihren Teil-Schrittketten ist somit im Rahmen des erfindungsgemäßen Systems gewährleistet. Das Ausführungsbeispiel zeigt die Schrittketten aus der Ursprungs-Schrittkette nach rechts herausgezogen. Ein horizontales Herausziehen der Teil-Schrittketten 22 aus der Ursprungs-Schrittkette 2 nach links ist ebenfalls möglich.

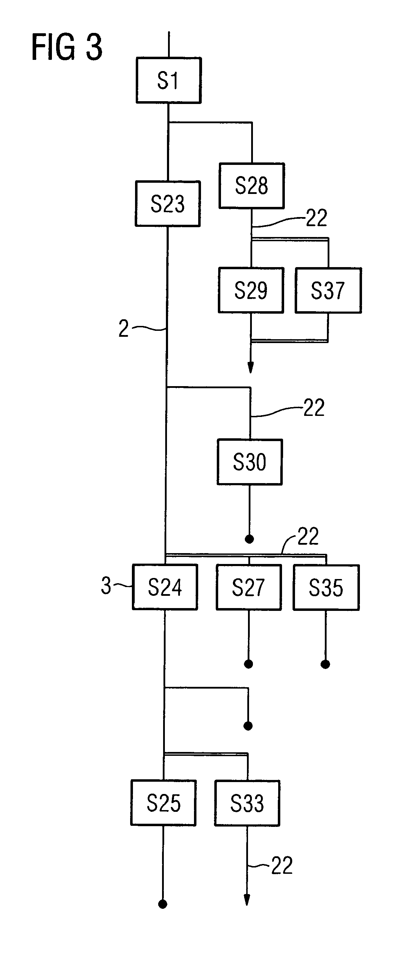

FIG 3 zeigt eine vertikal ausgedehnte Darstellung einer Schrittkette 2 mit ihren Teil-Schrittketten 22. Hierbei werden die einzelnen Grafikelemente 3 der Ursprungs-Schrittkette vertikal gemäß den in dem Anordnungsschema 4 hinterlegten Regeln derart auseinander gezogen, dass der Abstand zwischen ihnen ausreichen ist, um eine zwischen ihnen abzweigende Teil-Schrittkette 22 in ihrer vollen Länge mit ihren gesamten Grafikelementen 3 vertikal darzustellen. Die einzelnen Teil-Schrittketten 22 werden hierbei im gleichen Abstand von der Ursprungs-Schrittkette nach rechts heraus gezogen und direkt untereinander jeweils dargestellt. Eine schmale Darstellungsmöglichkeit, bei der die einzelnen Teil-Schrittketten untereinander, also in ihrer Abarbeitungssequenz auf der speicherprogrammierbaren Steuerung folgend dargestellt werden. Eine Darstellung der einzelnen Teil-Schrittketten links von der Ursprungs-Schrittkette ist hier ebenfalls denkbar.

## Patentansprüche

1. System (11) zur adaptierbaren grafischen Darstellung von Schrittketten, wobei die Schrittketten insbesondere Bearbeitungsschritte einer Speicherprogrammierbaren Steuerung eines Automatisierungssystems beschreiben, aufweisend:
• einen Editor (1) zur Visualisierung von die Schrittketten (2) bildenden Grafikelementen (3) und zur Bearbeitung der Schrittketten (2) durch einen Benutzer des Systems,
• vorgebbare Anordnungsschemata (4) für die Grafikelemente (3) und
• Adaptionsmittel zur Anpassung der grafischen Darstellung der Schrittketten (2) auf Basis der Anordnungsschemata (4), wobei die Anpassung der grafischen Darstellung der Schrittketten durch Verschiebung der Positionen der Grafikelemente (3) in dem Editor (1) anhand von in den Anordnungsschemata hinterlegten Regeln erfolgt.

2. System nach Anspruch 1, wobei die Verschiebung der Positionen der Grafikelemente (3) in dem Editor unter Beibehaltung ihrer Verknüpfung mit weiteren Grafikelementen (3) der Schrittketten (2) erfolgt.

3. System nach Anspruch 1 oder 2, wobei die Anordnungsschemata (4) bestimmten Anwendungsfällen und/oder Bearbeitungssituationen des Benutzers zuweisbar sind.

4. System nach einem der Ansprüche 1 bis 3, mit Eingabemitteln (5) zur Eingabe der Bearbeitungssituation und/oder des Anwendungsfalles durch den Benutzer des Systems (11).

5. System nach einem der Ansprüche 1 bis 3, mit Analysemitteln zur automatischen Analyse der Bearbeitungssituation und/oder des Anwendungsfalles durch das System.

6. System nach einem der Ansprüche 4 oder 5, wobei die Anpassung der grafischen Darstellung der Schrittketten durch Verschiebung der Positionen der Grafikelemente (3) in dem Editor (1) anhand der in den Anordnungsschemata hinterlegten Regeln bei Änderung der Bearbeitungssituation und/oder des Anwendungsfalles automatisch erfolgt.

7. System nach Anspruch 1 oder 2, mit mindestens einem Bedienelement (7) zur händischen Verschiebung der Grafikelemente (3) in dem Editor (1) durch den Benutzer des Systems.

8. System nach Anspruch 7, wobei das mindestens eine Bedienelement (7) als Control-Funktion einer Tastatur ausgebildet ist.

9. System nach Anspruch 7, wobei das mindestens eine Bedienelement (7) als Selektions-Funktion einer Maus ausgebildet ist, wobei die Selektion über Mehrfachselektion einzelner Grafikelemente (3) vorgesehen ist und/oder wobei die Selektion durch eine Lassofunktion der Maus vorgesehen ist.

10. System nach einem der vorhergehenden Ansprüche, wobei eine Verbreiterung der grafischen Darstellung der Schrittketten (2) durch Horizontalverschiebung der Grafikelemente (3) anhand der in den Anordnungsschemata hinterlegten Regeln vorgesehen ist, wobei die Grafikelemente einer Verzweigung und/oder eines Alternativzweiges der Schrittkette zur Horizontalverschiebung vorgesehen sind.

11. System nach Anspruch 10, wobei die Darstellung der einzelnen horizontal verschobenen Verzweigungen und/oder Alternativzweige der Schrittkette (2) jeweils als Teil-Schrittkette (22) mit vertikal angeordneten Grafikelementen (3) vorgesehen ist, wobei die innerhalb der Schrittkette (2) jeweils abzweigenden Teil-Schrittketten (22) über eine geringere Strecke gegenüber der Schrittkette (2) horizontal verschiebbar sind als die jeweils früher abzweigenden Teil-Schrittketten (22), wodurch die vertikalen Teil-Schrittketten (22) nebeneinander angeordnet darstellbar sind.

12. System nach einem der Ansprüche 1 bis 9, wobei eine Verkleinerung der Breite der grafischen Darstellung der Schrittketten (2) durch Vertikalverschiebung der Grafikelemente (3) anhand der in den Anordnungsschemata hinterlegten Regeln vorgesehen ist.

13. System nach Anspruch 12, wobei die Darstellung der einzelnen vertikal verschobenen Verzweigungen und/oder Alternativzweige der Schrittkette (2) jeweils als Teil-Schrittkette (22) mit vertikal angeordneten Grafikelementen (3) vorgesehen ist, wobei die aus der Schrittkette (2) abzweigenden Teil-Schrittketten (22) jeweils über die gleiche Strecke gegenüber der Schrittkette (2) horizontal verschiebbar sind, wodurch die vertikalen Teil-Schrittketten (22) untereinander angeordnet darstellbar sind.

14. Verfahren zur adaptierbaren grafischen Darstellung von Schrittketten, wobei die Schrittketten insbesondere Bearbeitungsschritte einer Speicherprogrammierbaren Steuerung eines Automatisierungssystems beschreiben, bei dem
• die Schrittketten (2) bildende Grafikelemente (3) in einem Editor (1) visualisiert werden und durch einen Benutzer des Systems bearbeitet werden,
• die Anordnung der Grafikelemente (3) durch Anordnungsschemata (4) vorgegeben wird und
• die grafische Darstellung der Schrittketten (2) auf Basis der Anordnungsschemata (4) angepasst wird, wobei die Anpassung der grafischen Darstellung der Schrittketten (2) durch Verschiebung der Positionen der Grafikelemente (3) in dem Editor (1) anhand von in den Anordnungsschemata hinterlegten Regeln erfolgt.

15. Verfahren nach Anspruch 14, bei dem die Positionen der Grafikelemente (3) in dem Editor unter Beibehaltung ihrer Verknüpfung mit weiteren Grafikelementen (3) der Schrittketten (2) verschoben werden.

16. Verfahren nach Anspruch 14 oder 15, bei dem die Anordnungsschemata (4) bestimmten Anwendungsfällen und/oder Bearbeitungssituationen des Benutzers zugewiesen sind.

17. Verfahren nach einem der Ansprüche 14 bis 16, bei dem die Bearbeitungssituation und/oder der Anwendungsfall durch den Benutzer des Systems (1) eingegeben werden.

18. Verfahren nach einem der Ansprüche 14 bis 16, bei dem die Bearbeitungssituation und/oder der Anwendungsfall durch das System automatisch analysiert werden.

19. Verfahren nach einem der Ansprüche 17 oder 18, bei dem die grafischen Darstellung der Schrittketten durch Verschiebung der Positionen der Grafikelemente (3) in dem Editor (1) anhand der in den Anordnungsschemata (4) hinterlegten Regeln bei Änderung der Bearbeitungssituation und/oder des Anwendungsfalles automatisch angepasst wird.

20. Verfahren nach Anspruch 14 oder 15, bei dem die Grafikelemente (3) in dem Editor (1) durch den Benutzer des Systems mithilfe mindestens eines Bedienelementes (5) händisch verschoben werden.

21. Verfahren nach Anspruch 20, bei dem die Grafikelemente (3) in dem Editor (1) mithilfe einer Control-Funktion einer Tastatur verschoben werden.

22. Verfahren nach Anspruch 20, bei dem die Grafikelemente (3) in dem Editor (1) mithilfe einer Selektions-Funktion einer Maus verschoben werden, wobei die Selektion über Mehrfachselektion einzelner Grafikelemente (3) und/oder durch eine Lassofunktion der Maus erfolgt.

23. Verfahren nach einem der Ansprüche 14 bis 22, bei dem die grafische Darstellung der Schrittketten (2) durch Horizontalverschiebung der Grafikelemente (3) anhand der in den Anordnungsschemata (4) hinterlegten Regeln verbreitert wird, wobei die Grafikelemente einer Verzweigung und/oder eines Alternativzweiges der Schrittkette (2) horizontal verschoben werden.

24. Verfahren nach Anspruch 23, bei dem die Darstellung der einzelnen horizontal verschobenen Verzweigungen und/oder Alternativzweige der Schrittkette (2) jeweils als Teil-Schrittkette (22) mit vertikal angeordneten Grafikelementen (3) erfolgt, wobei die aus der Schrittkette (2) jeweils später abzweigenden Teil-Schrittketten (22) über eine geringere Strecke gegenüber der Schrittkette (2) horizontal verschoben werden als die jeweils früher abzweigenden Teil-Schrittketten (22), wodurch die vertikalen Teil-Schrittketten (22) nebeneinander angeordnet dargestellt werden.

25. Verfahren nach einem der Ansprüche 14 bis 22, bei dem die Breite der grafischen Darstellung der Schrittketten (2) durch Vertikalverschiebung der Grafikelemente (3) anhand der in den Anordnungsschemata hinterlegten Regeln verkleinert wird.

26. Verfahren nach Anspruch 25, bei dem die Darstellung der einzelnen vertikal verschobenen Verzweigungen und/oder Alternativzweige der Schrittkette (2) jeweils als Teil-Schrittkette (22) mit vertikal angeordneten Grafikelementen (3) erfolgt, wobei die aus der Schrittkette (2) abzweigenden Teil-Schrittketten (22) über die gleiche Strecke gegenüber der Schrittkette (2) horizontal verschoben werden, wodurch die vertikalen Teil-Schrittketten (22) untereinander angeordnet dargestellt werden.
